(19) **Europäisches Patentamt / European Patent Office / Office européen des brevets**

(11) **EP 3 276 589 B1**

(12) **EUROPEAN PATENT SPECIFICATION**

(45) Date of publication and mention of the grant of the patent:
**17.11.2021 Bulletin 2021/46**

(21) Application number: **16772224.8**

(22) Date of filing: **14.03.2016**

(51) Int Cl.:
*G08G 1/16* (2006.01)   *B60W 30/09* (2012.01)
*B60W 30/14* (2006.01)   *B60W 40/09* (2012.01)
*B62D 6/00* (2006.01)   *B62D 101/00* (2006.01)
*B62D 109/00* (2006.01)   *B62D 113/00* (2006.01)
*B62D 137/00* (2006.01)

(86) International application number:
**PCT/JP2016/057927**

(87) International publication number:
**WO 2016/158341 (06.10.2016 Gazette 2016/40)**

(54) **DRIVING ASSISTANCE DEVICE**

FAHRASSISTENZVORRICHTUNG

DISPOSITIF D'AIDE À LA CONDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2015 JP 2015065761**

(43) Date of publication of application:
**31.01.2018 Bulletin 2018/05**

(73) Proprietor: **National University Corporation Nagoya University**
**Nagoya-shi, Aichi 464-8601 (JP)**

(72) Inventors:
• **YAMAGUCHI, Takuma**
**Nagoya-shi**
**Aichi 464-8601 (JP)**
• **OKUDA, Hiroyuki**
**Nagoya-shi**
**Aichi 464-8601 (JP)**
• **SUZUKI, Tatsuya**
**Nagoya-shi**
**Aichi 464-8601 (JP)**
• **TAZAKI, Yuichi**
**Nagoya-shi**
**Aichi 464-8601 (JP)**

(74) Representative: **Grünecker Patent- und Rechtsanwälte**
**PartG mbB**
**Leopoldstraße 4**
**80802 München (DE)**

(56) References cited:
**EP-A1- 1 997 705        WO-A1-2011/074115**
**DE-A1-102010 045 694        DE-A1-102012 010 130**
**JP-A- 2009 298 355        JP-A- 2009 298 355**
**JP-A- 2012 108 653**

**Description**

Technical Field

The present invention relates to a driving assistance device.

Background Art

A driving assistance device has been known to make an intervention in a driver's operation with regard to steering or braking of a vehicle, in order to prevent the vehicle from colliding with an obstacle or the like or to stop the vehicle at a predetermined position for the purpose of ensuring the safety of the vehicle. The driving assistance device is required to minimize the driver's feeling of strangeness by an operation intervention, while ensuring the safety. A prior art technique calculates multiple paths that the vehicle are likely to take when an operation intervention is made.

When the number of paths that do not overlap an area where an obstacle is present is greater than a predetermined number, the prior art technique does not make an operation intervention with giving preference to reduction of the feeling of strangeness. When the number of paths that do not overlap with the area where the obstacle is present is equal to or less than the predetermined number, the prior art technique makes an operation intervention with giving preference to the safety. This aims to satisfy both the required safety and reduction of the feeling of strangeness.

PTL 2 describes the driving assistance device for supporting obstacle avoidance operation by a driver. The necessity of avoidance operation support is determined based on a current operation state of the vehicle and the calculated range of the own vehicle capable of travelling without contact to an obstacle.

Citation List

Patent Literature

    PTL 1: JP 2010-201954A
    PTL 2: JP 2009-298355A

Summary

Technical Problem

There are various drivers who drive the vehicle, for example, young drivers, elder drivers, beginner drivers and skilled drivers. The different drivers may have different driving action characteristics. The above prior art technique, however, employs a uniform determination technique to determine whether an operation intervention is to be made or not without taking into account such differences of the driving action characteristics. This is likely to cause some drivers to have strong feeling of strangeness or is likely to fail in ensuring the safety. There is accordingly still a room of improvement in satisfaction of both the required safety and reduction of the feeling of strangeness.

The present invention discloses a technique that solves at least part of the problems described above.

Solution to Problem

This is achieved by the features of claim 1.

    (1) A driving assistance device according to the present invention is configured to make an intervention in a predetermined operation of a vehicle and comprises a range setter configured to set a predetermined range that is a range with regard to a behavior of the vehicle; an acceptable control input range calculator configured to obtain driving action characteristic information indicating a driving action characteristic of a driver of the vehicle and to calculate an acceptable control input range that is a range of the operation accepted at a present time, in order to cause the behavior of the vehicle estimated using the obtained driving action characteristic information to be kept in the predetermined range over a predetermined estimation interval; a determiner configured to determine whether the operation at the present time is within the acceptable control input range; and an operation intervention executor configured to make the intervention when it is determined that the operation at the present time is out of the acceptable control input range. This driving assistance device ensures the safety by an operation intervention and also further reduces the driver's feeling of strangeness by the operation intervention by using the driving action characteristic information for behavior estimation of the vehicle for the purpose of calculation of the acceptable control input range, compared with the prior art configuration that employs a uniform determination technique to determine whether an operation intervention is to be made or not.

(2) In the driving assistance device, the range setter may obtain specific driving action information that is a specific driver's driving action characteristic information and sets the predetermined range using the obtained specific driving action information. This driving assistance device makes an operation intervention to guide the driver to a specific driving action (for example, a model driving action) and thereby more reliably ensures the safety.

(3) In the driving assistance device, the driving assistance device may further comprise a driving action characteristic information manager configured to accumulate behavior information indicating the behavior of the vehicle during driving of the vehicle, in correlation with the driver of the vehicle and to generate the driving action characteristic information using the accumulated behavior information. This driving assistance device allows for generation of the driving action characteristic information that reflects the driver's driving action characteristic with high accuracy and thereby more effectively reduces the driver's feeling of strangeness by the operation intervention.

(4) In the driving assistance device, the acceptable control input range calculator may obtain vehicle characteristic information indicating a motion characteristic of the vehicle and estimate the behavior of the vehicle using the driving action characteristic information and the vehicle characteristic information. This driving assistance device enables an appropriate behavior to be estimated by taking into account the motion characteristics of the vehicle and thereby satisfies the required safety and reduction of the feeling of strangeness at high levels.

(5) In the driving assistance device, the driving assistance device may further comprise an intervention support input determiner configured to variably determine a degree of the intervention. This driving assistance device enables an operation intervention to be made at the appropriate degree according to the driver's driving ability and the like.

(6) In the driving assistance device, the operation may be a steering operation, and the behavior of the vehicle may include a path of the vehicle. This driving assistance device further reduces the driver's feeling of strangeness by an operation intervention with regard to the steering operation.

(7) In the driving assistance device, the operation may be at least one of a braking operation and an acceleration operation, and the behavior of the vehicle may include a velocity of the vehicle. This driving assistance device further reduces the driver's feeling of strangeness by an operation intervention with regard to at least one of braking and acceleration.

(8) In the driving assistance device, the acceptable control input range calculator may estimate the behavior of the vehicle without the intervention. This driving assistance device allows for behavior estimation with the higher accuracy compared with behavior estimation with an operation intervention, and thereby results in determining whether an operation intervention is to be made or not with high accuracy.

The technique disclosed in the present description may be implemented by various aspects, for example, the driving assistance device, a vehicle equipped with the driving assistance device, a driving assisting method, a control method of a vehicle, computer programs that implement these methods, and non-transitory recording media in which such computer programs are recorded.

Brief Description of Drawings

Fig. 1 is a diagram illustrating the schematic configuration of a vehicle 10 according to an embodiment;
Fig. 2 is a diagram illustrating the outline of operation intervention control performed by a driving assisting ECU 100;
Fig. 3 is a diagram illustrating the outline of the operation intervention control performed by the driving assisting ECU 100;
Fig. 4 is a diagram illustrating one example of a driving environment of the vehicle 10;
Fig. 5 is diagram illustrating one example of a driving action characteristic of a driver;
Fig. 6 is a diagram illustrating one example of the driving action characteristic of another driver;
Fig. 7 is a diagram illustrating one example of a repulsive force potential function Uw from left and right boundaries;
Fig. 8 is a diagram illustrating one example of a repulsive force potential function Uc from an obstacle OB;
Fig. 9 is a diagram illustrating one example of a distribution of coordinates P of the vehicle 10 at respective times;
Fig. 10 is a diagram illustrating one example of a contour LC of a potential field of an obstacle;
Fig. 11 is a diagram illustrating one example of a reference path RP;
Fig. 12 is a diagram illustrating one example of a method of setting an acceptable safety range SR;
Fig. 13 is a diagram illustrating one example of a method of determining an intervention support input Ua;
Fig. 14 is a flowchart showing a flow of operation intervention control process by the driving assisting ECU 100 according to the embodiment; and

Fig. 15 is a diagram illustrating one example of the method of setting the acceptable safety range SR according to a modification.

Description of Embodiments

A. Embodiment

A-1. Configuration of Device

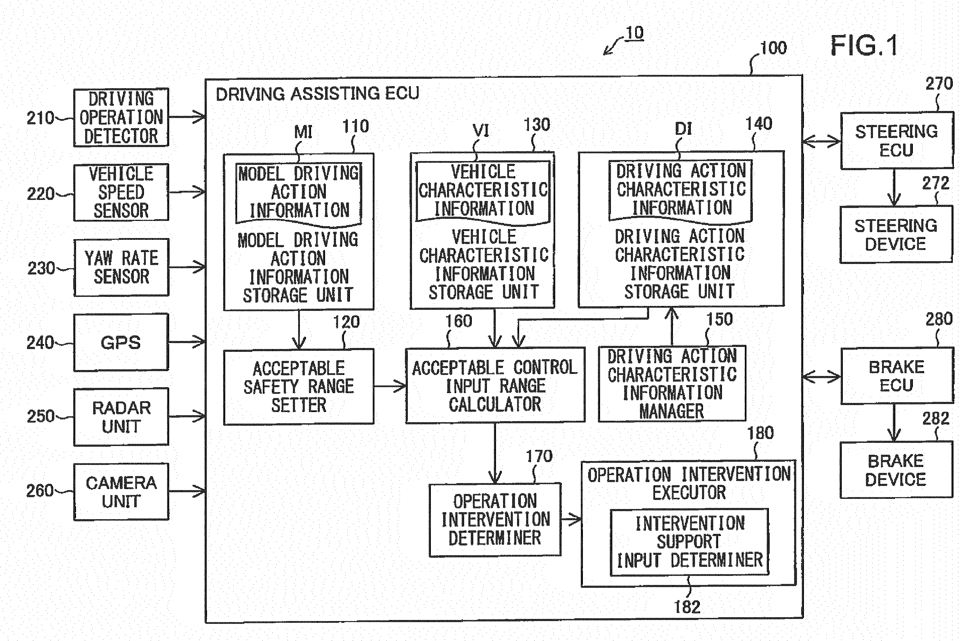

Fig. 1 is a diagram illustrating the schematic configuration of a vehicle 10 according to an embodiment. The vehicle 10 includes a driving operation detector 210, a vehicle speed sensor 220, a yaw rate sensor 230, a GPS 240, a radar unit 250, a camera unit 260, a driving assisting electronic control unit (hereinafter "electronic control unit" is referred to as "ECU") 100, a steering ECU 270, a steering device 272, a brake ECU 280 and a brake device 282. The respective ECUs included in the vehicle 10 are configured by computers including CPUs and storage units and are connected with each other, for example, via an in-vehicle network such as CAN (Control Area Network).

The steering device 272 is a steering gear configured to change the moving direction of the vehicle 10. The steering ECU 270 controls the behaviors of the steering device 272. The brake device 282 is a device configured to apply a braking force to the vehicle 10. The brake ECU 280 controls the behaviors of the brake device 282.

The driving operation detector 210 is a sensor configured to detect the driver's driving operation of the vehicle 10. The driving operation detector 210 includes, for example, a steering angle sensor configured to detect a steering angle of a steering wheel included in the steering device 272, and a brake pedal sensor configured to detect a depression angle of a brake pedal included in the brake device 282. The driving operation detector 210 outputs information indicating the detected driving operations (steering angle and depression angle of the brake pedal) to the driving assisting ECU 100.

The vehicle speed sensor 220 is a sensor configured to detect the velocity of the vehicle 10 and outputs information indicating the detected velocity of the vehicle 10 to the driving assisting ECU 100. The yaw rate sensor 230 is a sensor configured to detect the yaw rate of the vehicle 10 and outputs information indicating the detected yaw rate of the vehicle 10 to the driving assisting ECU 100. The GPS 240 is a sensor configured to detect the position of the vehicle 10 and outputs information indicating the detected position of the vehicle 10 to the driving assisting ECU 100.

The radar unit 250 includes a radar using, for example, millimeter wave and serves to detect any obstacle present in the surrounding of the vehicle 10 and to detect a lane where the vehicle 10 is to run by detecting objects (for example, side walls) that define the lane. The obstacle herein means, for example, other running vehicles, parking vehicles and pedestrians. The objects that define the lane may also be regarded as obstacles. The radar unit 250 outputs information indicating the detected positions of any obstacles and the lane to the driving assisting ECU 100.

The camera unit 260 includes a camera and serves to detect any obstacle present in the surrounding of the vehicle 10 by analyzing images taken by the camera and to detect a lane where the vehicle 10 is to run by detecting objects (for example, side walls and white lines) that define the lane. The camera unit 260 outputs information indicating the detected positions of any obstacles and the lane to the driving assisting ECU 100.

The driving assisting ECU 100 is an apparatus that performs an operation intervention control with regard to steering of the vehicle 10 in order to prevent a collision of the vehicle 10 with the obstacle and ensure safety of the vehicle 10. The operation intervention control with regard to steering of the vehicle 10 denotes control that causes the steering ECU 270 to make intervention in the drive's steering operation or more specifically to perform a forcible steering operation without the driver's operation.

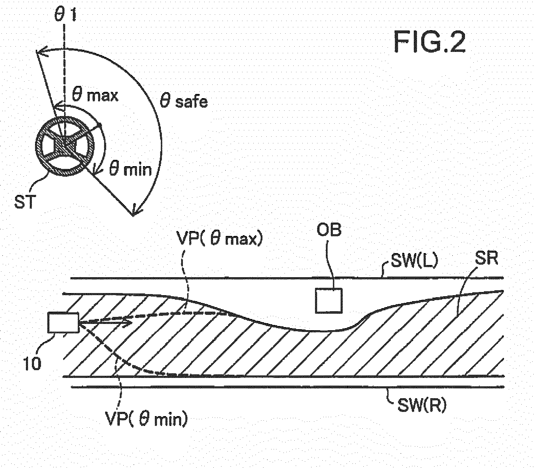

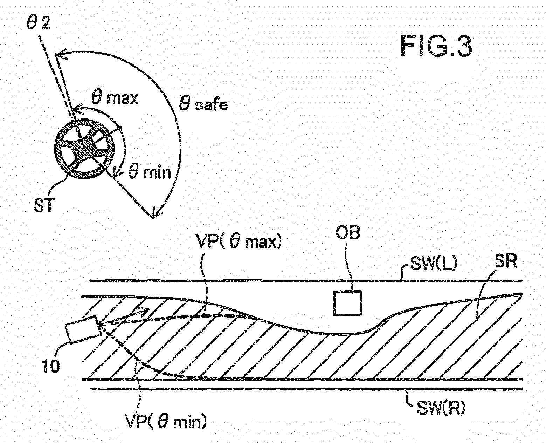

The operation intervention control performed by the driving assisting ECU 100 will be described later in detail but is briefly described below. Fig. 2 and Fig. 3 are diagrams illustrating the outline of the operation intervention control performed by the driving assisting ECU 100. Fig. 2 and Fig. 3 illustrate variations in steering angle of a steering wheel ST (where counterclockwise rotation is in a positive direction) included in the steering device 272 in correlation with the driving environment of the vehicle 10. In this driving environment, the vehicle 10 runs from a left side of the drawing to a right side on a lane defined by a right side wall SW(R) and a left side wall SW(L), and an obstacle OB is present ahead of the vehicle 10. The illustrations of Fig. 2 and Fig. 3 also include an acceptable safety range SR that denotes a range in which the behavior of the vehicle 10 is to be kept, in order to ensure the safety of the vehicle 10.

The driving assisting ECU 100 calculate an acceptable control input range $\theta_{safe}$ (more specifically, a minimum acceptable value $\theta_{min}$ and a maximum acceptable value $\theta_{max}$ of steering angle $\theta$) that denotes a range of operation (steering angle $\theta$ according to this embodiment) accepted at a present time t, in order to keep an estimated behavior of the vehicle 10 (path according to this embodiment) in the acceptable safety range SR over an estimation interval (time interval according to this embodiment). Fig. 2 and Fig. 3 illustrate an estimated path $VP(\theta_{max})$ of the vehicle 10 when the steering angle at the present time t is the maximum acceptable value $\theta_{max}$ and an estimated path $VP(\theta_{min})$ of the vehicle 10 when the steering angle at the present time t is the minimum acceptable value $\theta_{min}$. The driving assisting ECU 100 does not make an operation intervention when the steering angle $\theta$ at the present time t is equal to $\theta1$ that is

a value in the acceptable control input range $\theta_{safe}$ as in the example of Fig. 2, whereas making an operation intervention when the steering angle $\theta$ at the present time t is equal to $\theta2$ that is a value out of the acceptable control input range $\theta_{safe}$ as in the example of Fig. 3. Such operation intervention control performed by the driving assisting ECU 100 is not "emergency" operation intervention control that makes an operation intervention based on, for example, only a physical limit using a risk index such as a time to collision (TTC) but is rather "ordinary" operation intervention control that is triggered at a stage prior to an emergency state (i.e., in order to prevent an emergency state).

Driving action characteristic information DI indicating the driving action characteristic of each driver and vehicle characteristic information VI indicating the motion characteristics of the vehicle 10 are referred to in the procedure of estimating the path of the vehicle 10. Model driving action information MI indicating a model driver's driving action characteristic is referred to in the process of setting the acceptable safety range SR. These will be described later in detail.

In order to perform the operation intervention control described above, as shown in Fig. 1, the driving assisting ECU 100 includes a model driving action information storage unit 110, an acceptable safety range setter 120, a vehicle characteristic information storage unit 130, a driving action characteristic information storage unit 140, a driving action characteristic information manager 150, an acceptable control input range calculator 160, an operation intervention determiner 170 and an operation intervention executor 180. The operation intervention executor 180 includes an intervention support input determiner 182.

The model driving action information storage unit 110 of the driving assisting ECU 100 stores the model driving action information MI indicating the model driver's driving action characteristic. The acceptable safety range setter 120 refers to the model driving action information MI and sets the acceptable safety range SR. The vehicle characteristic information storage unit 130 stores the vehicle characteristic information VI indicating the motion characteristics of the vehicle 10. The driving action characteristic information manager 150 generates and manages the driving action characteristic information DI indicating the driving action characteristic of each driver. The driving action characteristic information storage unit 140 stores the driving action characteristic information DI. The acceptable control input range calculator 160 calculates the acceptable control input range $\theta_{safe}$. The operation intervention determiner 170 determines whether an operation intervention is to be made or not. The operation intervention executor 180 makes an operation intervention when it is determined that the operation intervention is to be made. The intervention support input determiner 182 determines an intervention support input that denotes the degree of intervention when the operation intervention is to be made. The following describes the operation intervention control performed by the driving assisting ECU 100 more in detail.

A-2. Driving Action Characteristic Information DI

The driving action characteristic information DI stored in the driving action characteristic information storage unit 140 (shown in Fig. 1) denotes information with regard to the driving action characteristic of each driver. The driving action characteristic denote an action characteristic when each driver drives the vehicle 10 and include, for example, a characteristic indicating which path the driver is likely to take at what velocity in a certain driving environment.

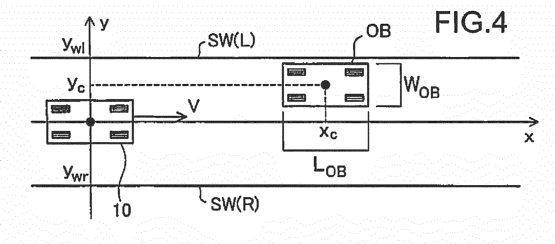

Fig. 4 is a diagram illustrating one example of the driving environment of the vehicle 10. In the driving environment shown in Fig. 4, the vehicle 10 (its center of gravity) is located at coordinates (0,0) on a straight one-way road that is extended in an x-axis direction and moves straight at a velocity V toward a positive x·axis direction. A right side wall SW(R) is present on the right side of the vehicle 10, and a left side wall SW(L) is present on the left side of the vehicle 10. A lane is defined by the two side walls SW. The right side wall SW(R) is expressed as $y=y_{wr}$, and the left side wall SW(L) is expressed as $y=y_{wl}$. A parking vehicle having a length $L_{OB}$ in the x·axis direction and a width $W_{OB}$ in a y-axis direction is present as an obstacle OB at coordinates $(x_c,y_c)$. For example, $y_{wr}=\cdot3.5$ (m), $y_{wl}= 3.5$ (m), $x_c= 70$ (m), $y_c= 1.57$ (m), $L_{OB}= 4.80$ (m) and $W_{OB}= 1.94$ (m).

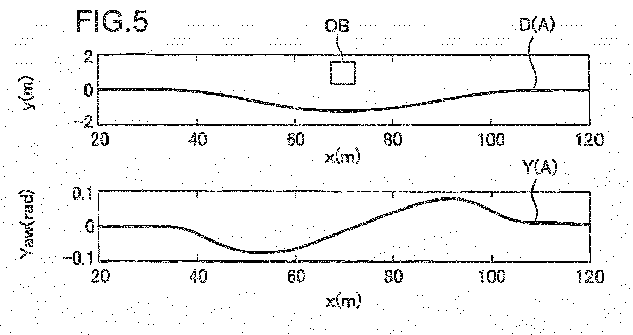

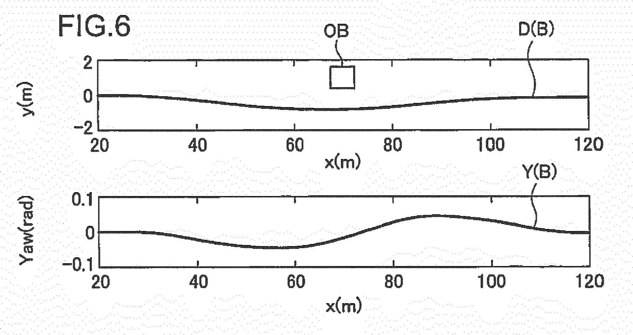

Fig. 5 and Fig. 6 are diagrams illustrating examples of the driving action characteristics of respective drivers. The upper drawing of Fig. 5 illustrates a path curve D(A) indicating a driving truck of the vehicle 10 when a driver A drives the vehicle 10 in the driving environment shown in Fig. 4. The lower drawing of Fig. 5 illustrates a yaw curve Y(A) indicating a variation in yaw of the vehicle 10 during such driving. Similarly Fig. 6 illustrates a path curve D(B) and a yaw curve Y(B) when a driver B different from the driver A drives the vehicle 10 in the driving environment shown in Fig. 4. In both Fig. 5 and Fig. 6, the abscissa shows the coordinate in the x-axis direction, and the ordinate shows the coordinate in the y-axis direction in the upper drawing and the yaw angle (rad) of the vehicle 10 in the lower drawing. As shown in Fig. 5 and Fig. 6, the path curve D and the yaw curve Y may differ by the driver even in the same driving environment. For example, the driver B who performs the driving action shown in Fig. 6 has an earlier start timing of an action for avoiding the obstacle OB and has a smaller variation in yaw, compared with the driver A who performs the driving action shown in Fig. 5. This means that the driver B has a driving action characteristic of avoiding the obstacle OB more gently.

Each driver's obstacle avoiding action may be thought to explicitly indicate the driver's risk feeling against the obstacle. Accordingly a cause of the difference in each driver's obstacle avoiding action, i.e., the difference in driving action characteristic, may be attributed to the difference in each driver's risk feeling against the obstacle. This embodiment models each driver's risk feeling and expresses the modeled risk feeling as a potential function in parameter expression as one example of modeling the driving action characteristic. This is described concretely below.

An attractive force potential function $U_g$ from a goal on a straight road, a repulsive force potential function $U_w$ from left and right boundaries (side walls and white lines) defining a lane and a repulsive force potential function $U_c$ from an obstacle OB are respectively expressed as Equation (1) to (3) given below:

$$U_g(x,y) = -w_g x \cdots (1)$$

$w_g$: weight coefficient of $U_g$

$$U_w(x,y) = w_w \sum_{e=l,r} \exp\left\{-\frac{(y-y_{we})^2}{\sigma_w^2}\right\} \cdots (2)$$

$w_w$: weight coefficient of $U_w$
$\sigma_w$ : standard deviation of $U_w$
$y_{wl}$ : position of left boundary
$y_{wr}$ : position of right boundary

$$U_c(x,y) = w_c \exp\left(-\frac{(x-x_c)^2}{\sigma_{cx}^2} - \frac{(y-y_c)^2}{\sigma_{cy}^2}\right) \cdots (3)$$

$w_c$: weight coefficient of $U_c$
$\sigma_{cx}$ : standard deviation of $U_c$ in x - axis direction
$\sigma_{cy}$ : standard deviation of $U_c$ in y-axis direction
$x_c$ : x coordinate of obstacle
$y_c$ : y coordinate of obstacle

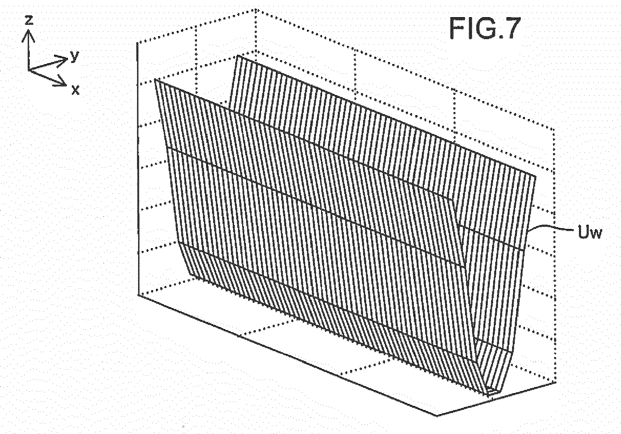

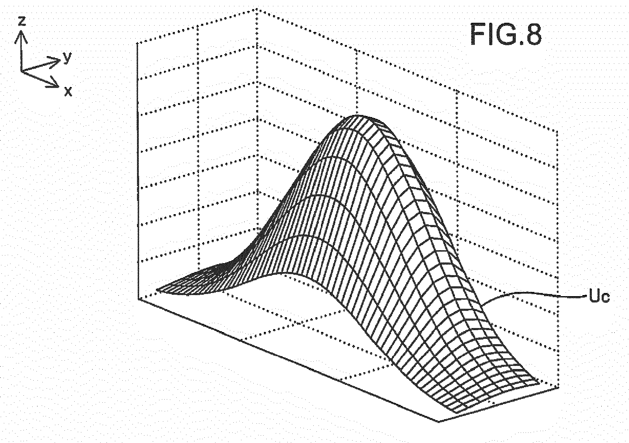

As shown in Equation (1) given above, the attractive force potential function $U_g$ from the goal is expressed as a linear potential function going forward on the assumption that the goal is at infinity in the moving direction. The repulsive force potential function $U_w$ from the left and right boundaries is expressed by using a one-dimensional Gauss function on the assumption that the boundaries have infinite lengths. Fig. 7 illustrates one example of the repulsive force potential function $U_w$ from the left and right boundaries in the driving environment of Fig. 4. The repulsive force potential function $U_c$ from the obstacle OB is expressed by using a twodimensional Gauss function. Fig. 8 illustrates one example of the repulsive force potential function $U_c$ from the obstacle OB in the driving environment of Fig. 4. In Fig. 7 and Fig. 8, a z axis shows the magnitude of the potential function.

The magnitude of the attractive force, the magnitude of the repulsive force, the range of influence and the like may be adjusted by changing the respective parameters in the three potential functions described above. The three potential functions are thus applicable to diverse situations, for example, different sizes of the obstacle OB or the respective drivers' different risk feelings. In the actual driving environment, a plurality of such factors are combined simultaneously. The driver's driving action may be expressed by using superposition of these three potential functions.

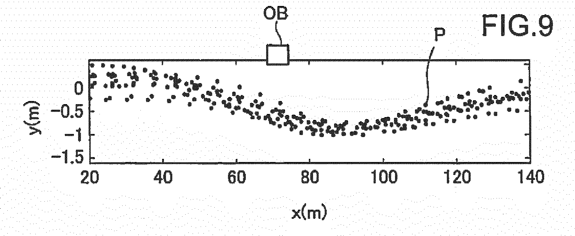

A procedure of this embodiment estimates the respective parameter values of the potential functions using driving data observed when each driver drives the vehicle 10, in order to fit the above potential functions to each driver. More specifically, the procedure obtains coordinates $(x_i^l, y_i^l)$ and a velocity $v(x_i^l, y_i^l)$ of the vehicle 10 at each time during driving of the vehicle 10 in a predetermined driving environment, as driving data. Here $1 = \{1, 2, ..., L\}$ denotes a trial number, $i = \{1, 2, ..., n_l\}$ denotes a data index, and $n_l$ denotes the number of data obtained in an 1-th trial. Fig. 9 illustrates one example of a distribution of coordinates P of the vehicle 10 at respective times when a certain driver drives the vehicle 10 multiple times in the driving environment shown in Fig. 4.

The procedure subsequently lists up primary elements included in the driving environment and establishes a potential function U(x,y) that expresses the driving environment as their superposition, for example, as shown in Equation (4) given below:

$$U(x,y) = U_g(x,y) + U_w(x,y) + \sum_{i}^{N} U_{ci}(x,y) \cdots (4)$$

$N$ : number of obstacles that are likely to affect driving
$U_{ci}$ : potential function expressing i - th obstacle

A parameter estimation problem of the potential function is formulated by the following optimization problem.

<Parameter Estimation Problem>

given: Environmental information : $y_{wl}$, $y_{wr}$, $x_{ci}$, $y_{ci}$,

Driving data : $x_i^l$ , $y_i^l$ , $v(x_i^l, y_i^l)$ $(i \in \{1,2,...n\}, l \in \{1,2,...,L\})$

find: $w_g$, $w_w$, $\sigma_w$, $w_{cl}$, $\sigma_{cxl}$, $\sigma_{cyi}$,..., $w_{cN}$, $\sigma_{cxN}$, $\sigma_{cyN}$
which minimize:

$$J = -\sum_{l=1}^{L} \sum_{i=1}^{n} E(v(x_i^l, y_i^l), d(x_i^l, y_i^l)) \cdots (5)$$

$$E(v,d) = |v - d|^2 \cdots (6)$$

$$d(x,y) = -\nabla U(x,y) = -\left[ \frac{\partial U(x,y)}{\partial x} \frac{\partial U(x,y)}{\partial y} \right]^T \cdots (7)$$

n, : number of measurement points
$L$ : number of measured data
$v(x_i^l, y_i^l)$ velocity measured at coordinates $(x_i^l, y_i^l)$

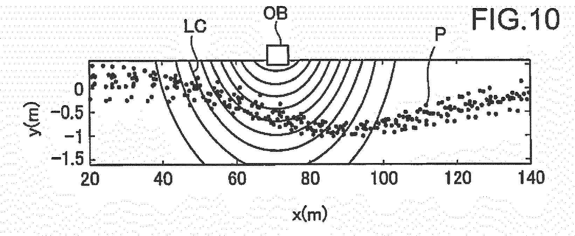

According to this embodiment, the vehicle 10 is provided with the radar unit 250 and the camera unit 260, so that the coordinates of the boundaries of the lane and the coordinates of the obstacle are known. Additionally, $d(x_i^l, y_i^l)$ denotes a steepest descent vector of the potential function U at the coordinates $(x_i^l, y_i^l)$. An evaluation function J in this optimization problem is a square sum of the difference between a measured velocity vector v and a slope vector d calculated from a potential field indicating the risk feeling. A route estimated from the potential field obtained as a result of this optimization is thus expected to be similar to the driver's avoidance route, and estimated parameters such as $w_{ci}$, $\sigma_{cxi}$ and $\sigma_{cyi}$ are expected to quantitatively express the driver's risk feeling against an obstacle in the driving environment. The estimated parameters are considered as intrinsic to a target intention and a target obstacle, so that the same parameters may be used for similar obstacles even in different driving environments. Fig. 10 illustrates one example of a contour LC of an identified potential field of an obstacle. The shape of the contour LC may differ by the driver. The evaluation function in the optimization problem for identification of the parameters of the potential function is not limited to the function described above but may be another function.

According to this embodiment, the driving action characteristic information manager 150 of the vehicle 10 (shown in Fig. 1) accumulates driving data of the vehicle 10, estimates the respective parameter values of the above potential functions based on the accumulated driving data, generates driving action characteristic information DI for specifying the respective estimated parameter values and stores the generated driving action characteristic information DI in the driving action characteristic information storage unit 140. The driving action characteristic information manager 150 identifies each driver based on specification via a nonillustrated user interface or the like and accumulates the driving data with respect to each driver. At a stage prior to accumulation of sufficient driving data, driving action characteristic information DI indicating, for example, an average driver's driving action characteristic is stored in the driving action characteristic information storage unit 140. At a stage of accumulation of sufficient driving data, the driving action characteristic information DI is updated. The driving action characteristic information DI may be updated at regular intervals or at random times after that. The driving data corresponds to the behavior information of the claims.

A-3. Setting Acceptable Safety Range SR

The following describes setting of the acceptable safety range SR by the acceptable safety range setter 120 (shown in Fig. 1). When the respective parameters of the above potential functions are estimated and the driving action characteristic information DI for specifying the respective parameters is generated, a reference path RP is generated by using the driving action characteristic information DI. The reference path RP denotes a path of the vehicle 10 having a minimum risk potential. The reference path RP, however, needs to be a path on which the vehicle 10 can actually run. In other words, the vehicle 10 has a non-holonomic constraint and a limitation in possible steering angle. Accordingly, the vehicle characteristic information VI (shown in Fig. 1) that is stored in the vehicle characteristic information storage unit 130 and that indicates the motion characteristics of the vehicle 10 is referred to in the process of generating the reference path RP.

The vehicle characteristic information VI includes vehicle motion characteristic models obtained by modeling the motion characteristics of the vehicle 10. According to this embodiment, known two-wheel models shown by Equations (8) to (10) given below or known tire models shown by Equations (11) and (12) given below is used as the vehicle motion characteristic models:

$$mV\left(\frac{d\beta}{dt}+\gamma\right)=2Y_f+2Y_r\cdots(8)$$

$$\frac{d\theta}{dt}=\gamma\cdots(9)$$

$$I\frac{d\gamma}{dt}=2l_fY_f-2l_rY_r\cdots(10)$$

$m$ : mass of the vehicle body
$I$ : yaw moment of inertia of the vehicle body
$V$: vehicle speed
$l_f$ : distance from the center of gravity of the vehicle body to the front wheel
$l_r$ : distance from the center of gravity of the vehicle body to the rear wheel
$\beta$ : body slip angle
$\gamma$ : yaw rate
$\theta$ : yaw angle

$$Y_f=-K_f\beta_f=-K_f\left(\beta+\frac{l_f\gamma}{V}-\delta\right)\cdots(11)$$

$$Y_r=-K_r\beta_r=-K_r\left(\beta-\frac{l_r}{V}\right)\cdots(12)$$

$K_f$:cornering stiffness of the front wheel
$K_r$:cornering stiffness of the rear wheel
$\delta$: steering angle of the front wheel

The following optimization problem with a physical limitation with regard to the tire turning angle and discretization of the above motion characteristic of the vehicle 10 with respect to time as constraint conditions is incorporated in a procedure of generating the reference path RP.

<Optimization Problem Used for Generation of Reference path RP>

given: respective parameters of potential functions, respective parameters of vehicle motion characteristic model, and conditions($x_k$, $y_k$, $\theta_k$) of vehicleat time k

find: $\delta_{k+1}$, $X_{k+1}$, $y_{k+1}$, $\theta_{k+1}$

which minimize: $U(x_{k+1}, y_{k+1})$

subject to: $\delta_{min-} \leq \delta \leq \delta_{max}$,

constraints of vehiclemotion characteristic model (Equations(8) - (12) and the like)

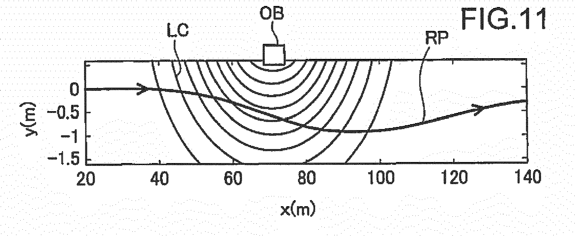

This optimization problem is a problem of searching for a front wheel steering angle and a condition that provide a minimum risk potential in a possible solution space by the vehicle motion characteristic models. The reference path RP is generated using this optimization problem by the following procedure. Repeating this procedure generates a route ($x_k$, yk) (k $\in$ {1, 2, 3, ..., K}) suitable for a potential field under constraint of the motion characteristic models of the vehicle 10, as the reference path RP. Fig. 11 illustrates one example of the generated reference path RP.

Step 1: Setting initial values (k= 1, ($x_k$, $y_k$, $\theta_k$)= ($x_0$, $y_0$, $\theta_0$));

Step 2: Solving the above optimization problem and calculating a value $\delta_{k+i}$ that moves the vehicle 10 in a direction of minimizing the potential, while satisfying the restrictions of the vehicle motion characteristic models, in the potential field suited to each driver;

Step 3: Calculating conditions $x_{k+1}$, $y_{k+1}$ and $\theta_{k+1}$ in a next step using the calculated value $\delta_{k+1}$, based on the motion characteristic models of the vehicle 10; and

Step 4: Terminating the procedure when k+1= K (K denotes a desired number of generation steps), and otherwise returning to Step 2 with incrementing k as k= k+1.

As described above, the acceptable safety range SR is set by referring to the model driving action information MI stored in the model driving action information storage unit 110 (shown in Fig. 1). The model driving action information MI denotes information indicating a model driver's (for example, a driving instructor of a driving school) driving action characteristic and is information with regard to the respective parameter values of the above potential functions with regard to the model driver (i.e., the model driver's driving action characteristic information DI) according to this embodiment. The model driving action information MI corresponds to the specific driving action information of the claims.

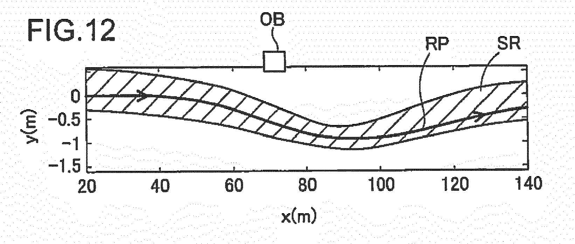

Fig. 12 is a diagram illustrating one example of a method of setting the acceptable safety range SR. Fig. 12 illustrates a reference path RP generated by using the respective parameter values of the potential functions with regard to a model driver. This reference path RP denotes a model path of the vehicle 10 in a specific driving environment in which the reference path RP is generated. According to this embodiment, a range that includes this reference path RP and provides the reference path RP with some margins calculated by taking into account a distribution is set as the acceptable safety range SR. The acceptable safety range SR corresponds to the predetermined range of the claims.

A-4. Calculation of Acceptable Control Input Range $\theta_{safe}$

The following describes calculation of the acceptable control input range $\theta_{safe}$ by the acceptable control input range calculator 160 (shown in Fig. 1). As described above, the acceptable control input range $\theta_{safe}$ denotes the range of steering angle (the minimum acceptable value $\theta_{min}$ and the maximum acceptable value $\theta_{max}$ of the steering angle $\theta$) accepted at the present time t, in order to cause the path of the vehicle 10 estimated by referring to the driving action characteristic information DI and the vehicle characteristic information VI to be kept in the acceptable safety range SR over the estimation interval. The acceptable control input range calculator 160 solves the following acceptable control input range calculation problem from the viewpoint of constraint satisfaction, so as to set the acceptable control input range $\theta_{safe}$.

<Acceptable Control Input Range Calculation Problem>

given: model driving action (time t to t + K) , acceptable safety range SR (time t to t + K) , estimation interval K

find : $\theta_{safe}$ = [$\theta_{min}$, $\theta_{max}$] at time t

subject to : The path of the vehicle by taking into account the driving action characteristic and the vehicle motion characteristics is kept in the acceptable safety range SR.

A-5. Operation Intervention Determination and Operation Intervention Execution

The following describes operation intervention determination by the operation intervention determiner 170 (shown in Fig. 1) and operation intervention execution by the operation intervention executor 180. The operation intervention determiner 170 determines whether the steering angle $\theta$ at the present time t is within the acceptable control input range $\theta_{safe}$. The operation intervention determiner 170 determines that an operation intervention is not to be made when the steering angle $\theta$ at the present time t is within the acceptable control input range $\theta_{safe}$, whereas determining that an operation intervention is to be made when the steering angle $\theta$ at the present time t is out of the acceptable control input range $\theta_{safe}$.

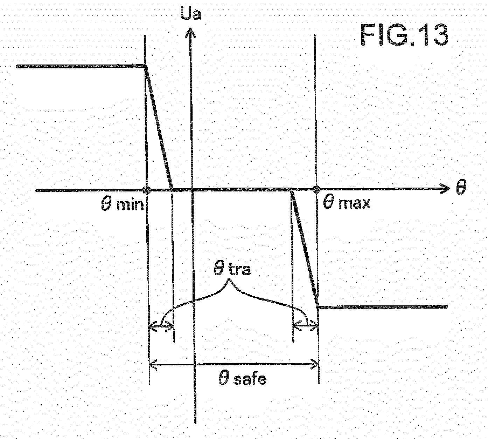

When the steering angle 0 at the present time t is out of the acceptable control input range $\theta_{safe}$ and it is determined that an operation intervention is to be made, the operation support input determiner 182 variably determines the degree of intervention or more specifically an intervention support input Ua that is to be added to the driver's steering torque Uh at the present moment. Fig. 13 is a diagram illustrating one example of a method of determining the intervention support input Ua. In the example of Fig. 13, the intervention support input Ua is determined to be a predetermined fixed value, whether the steering angle $\theta$ at the present time t is larger than the maximum acceptable value $\theta_{max}$ or the steering angle $\theta$ at the present time t is smaller than the minimum acceptable value $\theta_{min}$. This value is variably set according to the driving ability of each driver. In the example of Fig. 13, in order to ensure the smooth operation feeling and further reduce the driver's feeling of strangeness, an operation intervention is also made with the intervention support input Ua according to the steering angle $\theta$ in transient areas $\theta_{trn}$ that are areas near to the respective boundaries of the acceptable control input range $\theta_{safe}$. In other words, in the example of Fig. 13, an operation intervention is not made when the steering angle $\theta$ at the present moment t is in any area other than the transient areas $\theta_{trn}$ in the acceptable control input range $\theta_{safe}$.

The operation intervention executor 180 makes an operation intervention with regard to steering via the steering ECU 270 using the intervention support input Ua determined by the intervention support input determiner 182.

A-6. Operation Intervention Control Process

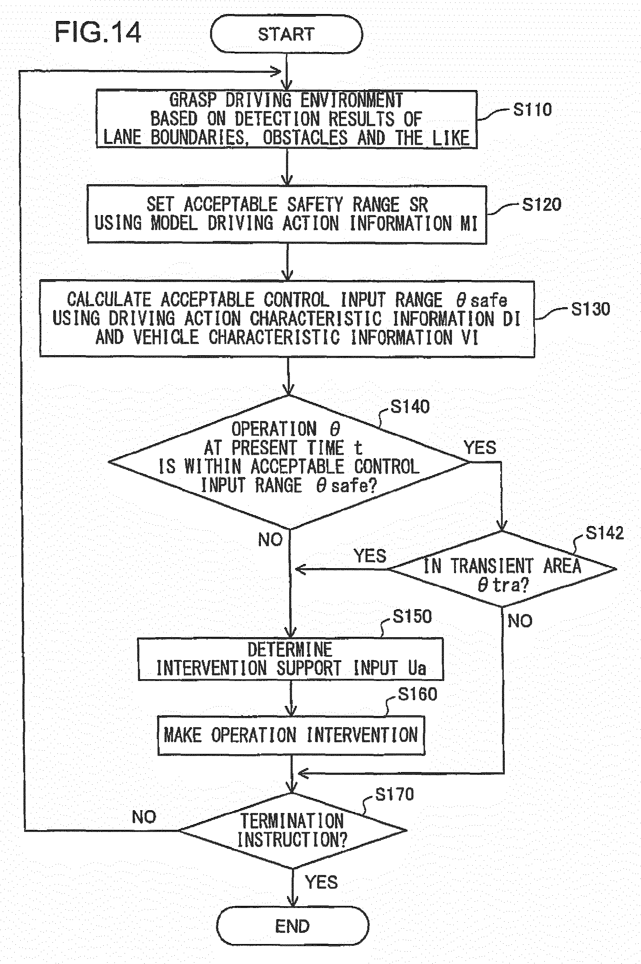

Fig. 14 is a flowchart showing a flow of operation intervention control process by the driving assisting ECU 100 according to the embodiment. The driving assisting ECU 100 first obtains the detection results of lane boundaries and any obstacle and the information with regard to the driving operation, the vehicle speed, the yaw rate and the like from the driving operation detector 210, the vehicle speed sensor 220, the yaw rate sensor 230, the radar unit 250, the camera unit 260 and the like to grasp the driving environment of the vehicle 10 (S110). The acceptable safety range setter 120 subsequently sets the acceptable safety range SR (shown in Fig. 12) according to the grasped driving environment using the model driving action information MI (S120).

The acceptable control input range calculator 160 subsequently calculates the acceptable control input range $\theta_{safe}$ (shown in Fig. 2 and Fig. 3) by using the driving action characteristic information DI and the vehicle characteristic information VI (S130). The operation intervention determiner 170 determines whether the operation (steering angle $\theta$) at the present time t is within the acceptable control input range $\theta_{safe}$ in real time (S140). When it is determined that the steering angle $\theta$ at the present time t is out of the acceptable control input range $\theta_{safe}$ (S140: NO), the intervention support input determiner 182 determines the intervention support input Ua (S150) and the operation intervention executor 180 makes an operation intervention using the determined intervention support input Ua (S160).

When it is determined that the steering angle $\theta$ at the present time t is within the acceptable control input range $\theta_{safe}$ (S140: YES), on the other hand, the operation intervention determiner 170 determines whether the steering angle $\theta$ at the present time t is within the transient area $\theta_{tra}$ (shown in Fig. 13) (S142). When it is determined that the steering angle $\theta$ at the present time t is within the transient area $\theta_{tra}$ (S142: YES), the intervention support input determiner 182 determines the intervention support input Ua (S150) and the operation intervention executor 180 makes an operation intervention using the determined intervention support input Ua (S160). When it is determined that the steering angle $\theta$ at the present time t is within the acceptable control input range $\theta_{safe}$ (S140: YES) and is out of the transient area $\theta_{tra}$ (S142: NO), the processing of S150 and S160 is skipped.

The driving assisting ECU 100 repeatedly performs the processing of S110 to S160 described above unless receiving a processing termination instruction (S170: NO). The driving assisting ECU 100 terminates the operation intervention control process when receiving the processing termination instruction (S170: YES).

As described above, in the driving assisting ECU 100 of this embodiment, the acceptable safety range setter 120 sets the acceptable safety range SR that is a range with regard to the path of the vehicle 10. The acceptable control input range calculator 160 calculates the acceptable control input range $\theta_{safe}$ that is the range of the steering angle $\theta$ accepted at the present time t, in order to cause the path of the vehicle 10 estimated by using the driving action characteristic information DI indicating the driving action characteristic of the driver of the vehicle 10 to be kept in the acceptable safety range SR over the estimation interval. The operation intervention determiner 170 determines whether the steering angle $\theta$ at the present time t is within the acceptable control input range $\theta_{safe}$. When it is determined that the steering angle $\theta$ at the present time t is out of the acceptable control input range $\theta_{safe}$, the operation intervention executor 180 makes an operation intervention with regard to steering. The driving assisting ECU 100 of this embodiment ensures the safety by an operation intervention and also further reduces the driver's feeling of strangeness by the operation intervention by using the driving action characteristic information DI for path estimation of the vehicle 10 for the purpose of calculation of the acceptable control input range $\theta_{safe}$, compared with the prior art configuration that employs a uniform determination technique to determine whether an operation intervention is to be made or not.

The driving assisting ECU 100 of this embodiment sets the acceptable safety range SR by using the model driving action information MI that is the model driver's driving action characteristic information DI. This configuration makes an operation intervention to guide the driver to a model driving action and thereby more reliably ensures the safety.

Additionally, in the driving assisting ECU 100 of this embodiment, the driving action characteristic information manager 150 accumulates the driving data indicating the behavior of the vehicle 10 (behavior information) in correlation with the driver during driving of the vehicle 10 and generates the driving action characteristic information DI using the accumulated driving data. This configuration allows for generation of the driving action characteristic information DI that reflects the driver's driving action characteristic with high accuracy and thereby more effectively reduces the driver's feeling of strangeness by an operation intervention.

The driving assisting ECU 100 of this embodiment also uses the vehicle characteristic information VI indicating the motion characteristics of the vehicle 10 for path estimation of the vehicle 10 for the purpose of calculation of the acceptable control input range $\theta_{safe}$. This configuration enables an appropriate path to be estimated by taking into account the motion characteristics of the vehicle 10 and thereby satisfies the required safety and reduction of the feeling of strangeness at high levels.

Furthermore, in the driving assisting ECU 100 of this embodiment, the intervention support input determiner 182 variably determines the intervention support input Ua. This configuration enables an operation intervention to be made using the appropriate intervention support input Ua according to the driver's driving ability and the like.

In the driving assisting ECU 100 of this embodiment, the path of the vehicle 10 estimated for calculation of the acceptable control input range $\theta_{safe}$ by the acceptable control input range calculator 160 is a path without an operation intervention. This configuration allows for path estimation with the higher accuracy compared with path estimation with an operation intervention, and thereby results in determining whether an operation intervention is to be made or not with high accuracy.

B. Modifications

Some of possible modifications of the above embodiment are given below.

The above embodiment describes the operation intervention control with regard to steering of the vehicle 10. The present invention is also applicable to, for example, operation intervention control with regard to braking of the vehicle 10 as in the case of, for example, stopping at a blind intersection. The present invention may be applied to operation intervention control with regard to braking, for example, as described below.

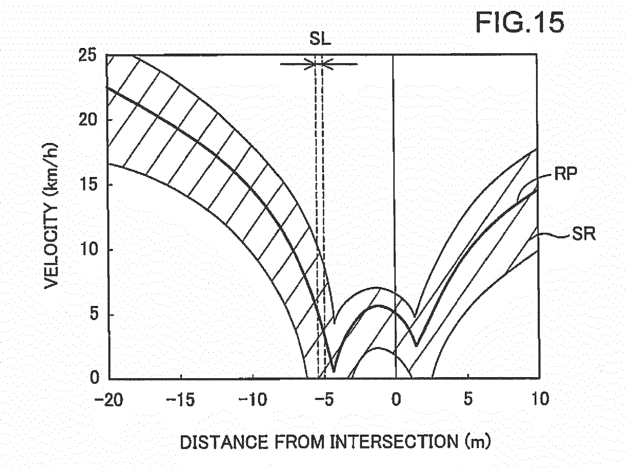

The procedure of this modification recognizes a driving environment that the vehicle 10 approaches a blind intersection, using the GPS 240, the radiator unit 250, the camera unit 260 and the like (S110 in Fig. 14) and sets the acceptable safety range SR with regard to the vehicle speed (S120 in Fig. 14). Fig. 15 is a diagram illustrating one example of the method of setting the acceptable safety range SR according to the modification. In Fig. 15, the ordinate shows the velocity of the vehicle 10, and the abscissa shows the distance from an intersection. There is a stop line SL at the position of 5 (m) before the intersection. Fig. 15 shows a reference path RP generated by using driving data of a model driver and an acceptable safety range SR with regard to the vehicle speed that is set by providing the reference path RP with some margins. This shows that the model driver once reduces the vehicle speed to approximately zero at the position of the stop line SL, slowly moves and increases the speed again after a right and left checking action. The procedure calculates an operation (depression angle of a brake pedal) to keep the vehicle speed in the acceptable safety range SR over an estimation interval, as the acceptable control input range $\theta_{safe}$ (S130 in Fig. 14). The procedure then determines whether an operation intervention with regard to braking is to be made or not, based on whether the operation (depression angle of the brake pedal) at the present time t is within the acceptable control input range $\theta_{safe}$ (S140 in Fig. 14). When it is determined that an operation intervention is to be made, the procedure determines a pedal force applied to the brake pedal as the intervention support input Ua (S150 in Fig. 14) and makes an operation intervention using the determined intervention support input Ua via the brake ECU 280 (S160 in Fig. 14).

Operation intervention control with regard to acceleration may be performed in addition to the operation intervention control with regard to braking or in place of the operation intervention control with regard to braking. For example, when it is determined that the vehicle speed is lower than the acceptable safety range SR in the estimation interval, an operation intervention may be made to increase the depression angle of an accelerator pedal.

As described above, the aspect of the present invention may make not only an operation intervention with regard to steering but an operation intervention with regard to braking or acceleration, so as to further reduce the driver's feeling of strangeness, while ensuring safety by the operation intervention.

The configuration of the vehicle 10 described in the above embodiment is only illustrative. Part of the components described above may be omitted from the vehicle 10, or components other than those described above may be added to the vehicle 10. The model representing the driver's driving action characteristic described in the above embodiment is only illustrative, and another model, for example, a hybrid dynamic system model may be employed. The model representing the motion characteristics of the vehicle described in the above embodiment is only illustrative, and another model, for example, a steady circular turning model or a constant velocity model.

According to the above embodiment, when the steering angle is out of the acceptable control input range $\theta_{safe}$, the intervention support input Ua is determined to be a predetermined fixed value (as shown in Fig. 13). According to a modification, the intervention support input Ua may be varied according to the steering angle $\theta$ at the present time. According to the above embodiment, an operation intervention is also made in the transient areas $\theta_{tra}$ in the acceptable control input range $\theta_{safe}$. According to a modification, an operation intervention is not made at all in the acceptable control input range $\theta_{safe}$.

According to the above embodiment, the acceptable safety range SR is set by using the model driving action information MI that is the model driver's driving action characteristic information DI. According to a modification, the acceptable safety range SR may be set by using one specific driver's or multiple drivers' driving action information DI. It is also not essential to use the driving action characteristic information DI for setting the acceptable safety range SR. Any method may be employed to set the acceptable safety range SR as long as the acceptable safety range SR is set as a range in which the behavior of the vehicle 10 is to be kept, in order to ensure the safety of the vehicle 10.

According to the above embodiment, the estimation interval is a time interval. The estimation interval may, however, be a distance interval.

According to the above embodiment, the driving assisting ECU 100 performs the ordinary operation intervention control that is triggered at the stage prior to the emergency state. The driving assisting ECU 100 may additionally perform emergency operation intervention control that makes an operation intervention based on, for example, only a physical limit using a risk index such as a time to collision (TTC).

The details of the technique of modeling the driver and the like described in the above embodiment and modifications are also published in the following references:

Noriyasu Noto, et al., "Steering assisting system for obstacle avoidance based on personalized potential field", Intelligent Transportation Systems (ITSC) 2012;

Ikami Norimitsu, et al., "Online parameter estimation of driving behavior using probability-weighted ARX models", Intelligent Transportation Systems (ITSC) 2011;

Okuda et al., "Obstacle avoiding assist control based on personalized potential technique", Journal of Automotive Engineers, 44.3 (2013) p895 - 901; and

Nagai et al., "Obstacle avoiding assist control based on personalized potential technique (part 2)", Proceedings of Autumn Symposium, 211-20135816, 2013.

Reference Signs List

10: vehicle, 100: driving assisting ECU, 110: model driving action information storage unit, 120: acceptable safety range setter, 130: vehicle characteristic information storage unit, 140: driving action characteristic information storage unit, 150: driving action characteristic information manager, 160: acceptable control input range calculator, 170: operation intervention determiner, 180: operation intervention executor, 182: intervention support input determiner, 210: driving operation detector, 220: vehicle speed sensor, 230: yaw rate sensor, 240: GPS, 250: radar unit, 260: camera unit, 270: steering ECU, 272: steering device, 280: brake ECU, 282: brake device, DI: driving action characteristic information, MI: model driving action information, VI: vehicle characteristic information

**Claims**

1. A driving assistance device configured to make an intervention in a predetermined driver's driving operation of a vehicle (10), the driving assistance device comprising:

a range setter (120) configured to set a predetermined range that is a range with regard to a behavior of the vehicle (10); and
an operation intervention executor (180);
**characterized by**
an acceptable control input range calculator (160) configured to obtain driving action characteristic information (DI) indicating a driving action characteristic of a driver of the vehicle in a certain driving environment and to calculate an acceptable control input range that is a range of the driver's driving operation accepted at a present time, in order to cause the behavior of the vehicle (10) estimated using the obtained driving action characteristic information (DI) to be kept in the predetermined range over a predetermined estimation interval; and
a determiner (170) configured to determine whether the driver's driving operation at the present time is within the acceptable control input range; and in that
said operation intervention executor (180) is configured to make the intervention when it is determined that the driver's driving operation at the present time is out of the acceptable control input range.

2. The driving assistance device according to claim 1, wherein the range setter (120) obtains specific driving action information that is a specific driver's driving action characteristic information and sets the predetermined range using the obtained specific driving action information.

3. The driving assistance device according to either claim 1 or claim 2, further comprising a driving action characteristic information manager (150) configured to accumulate behavior information indicating the behavior of the vehicle (10) during driving of the vehicle (10), in correlation with the driver of the vehicle (10) and to generate the driving action characteristic information (DI) using the accumulated behavior information.

4. The driving assistance device according to any one of claims 1 to 3, wherein the acceptable control input range calculator (160) obtains vehicle characteristic information (VI) indicating a motion characteristic of the vehicle (10) and estimates the behavior of the vehicle (10) using the driving action characteristic information (DI) and the vehicle characteristic information (VI).

5. The driving assistance device according to any one of claims 1 to 4, further comprising an intervention support input determiner (182) configured to variably determine a degree of the intervention.

6. The driving assistance device according to any one of claims 1 to 5,

   wherein the driver's driving operation is a steering operation, and
   the behavior of the vehicle (10) includes a path (VP) of the vehicle (10).

7. The driving assistance device according to any one of claims 1 to 5,

   wherein the driver's driving operation is at least one of a braking operation and an acceleration operation, and
   the behavior of the vehicle (10) includes a velocity of the vehicle (10).

8. The driving assistance device according to any one of claims 1 to 7, wherein the acceptable control input range calculator (160) estimates the behavior of the vehicle (10) without the intervention.


**Patentansprüche**

1. Fahrunterstützungsvorrichtung, die dazu konfiguriert ist, einen Eingriff in einen vorgegebenen Fahrvorgang eines Fahrer eines Fahrzeugs (10) vorzunehmen, wobei die Fahrunterstützungsvorrichtung umfasst:

   einen Bereichseinsteller (120), der dazu konfiguriert ist, einen vorgegebenen Bereich einzustellen, bei dem es sich um einen Bereich in Bezug auf ein Verhalten des Fahrzeugs (10) handelt; und
   einen Vorgangseingriffsausführer (180);
   **gekennzeichnet durch**
   einen Rechner (160) für einen akzeptablen Steuereingabebereich, der dazu konfiguriert ist, Fahraktionscharakteristikinformationen (DI) zu erhalten, die eine Fahraktionscharakteristik eines Fahrers des Fahrzeugs in einer bestimmten Fahrumgebung anzeigen, und einen akzeptablen Steuereingabebereich zu berechnen, bei dem es sich um einen Bereich des zu einem gegenwärtigen Zeitpunkt akzeptierten Fahrvorgangs des Fahrers handelt, um zu bewirken, dass das Verhalten des Fahrzeugs (10), das unter Verwendung der erhaltenen Fahraktionscharakteristikinformationen (DI) geschätzt wird, über ein vorgegebenes Schätzintervall in dem vorgegebenen Bereich gehalten wird; und
   eine Bestimmungseinrichtung (170), die zum Bestimmen konfiguriert ist, ob der Fahrvorgang des Fahrers zum gegenwärtigen Zeitpunkt innerhalb des akzeptablen Steuereingabebereichs liegt; und **dadurch** dass
   der Vorgangseingriffsausführer (180) dazu konfiguriert ist, den Eingriff vorzunehmen, wenn bestimmt wird, dass der Fahrvorgang des Fahrers zum gegenwärtigen Zeitpunkt außerhalb des akzeptablen Steuereingabebereichs liegt.

**2.** Fahrunterstützungsvorrichtung nach Anspruch 1, wobei der Bereichseinsteller (120) spezifische Fahraktionsinformationen erhält, bei welchen es sich um eine spezifische Fahraktionscharakteristikinformation des Fahrers handelt, und den vorgegebenen Bereich unter Verwendung der erhaltenen spezifischen Fahraktionsinformationen einstellt.

**3.** Fahrunterstützungsvorrichtung nach Anspruch 1 oder Anspruch 2, des Weiteren umfassend einen Fahraktionscharakteristik-Informationsmanager (150), der dazu konfiguriert ist, Verhaltensinformationen, die das Verhalten des Fahrzeugs (10) während des Fahrens des Fahrzeugs (10) anzeigen, in Korrelation zu dem Fahrer des Fahrzeugs (10) zu akkumulieren und die Fahraktionscharakteristikinformationen (DI) unter Verwendung der akkumulierten Verhaltensinformationen zu erzeugen.

**4.** Fahrunterstützungsvorrichtung nach einem der Ansprüche 1 bis 3, wobei der Rechner (160) für einen akzeptablen Steuereingabebereich Fahrzeugcharakteristikinformationen (VI) erhält, die eine Bewegungscharakteristik des Fahrzeugs (10) anzeigen, und das Verhalten des Fahrzeugs (10) unter Verwendung der Fahraktionscharakteristikinformationen (DI) und der Fahrzeugcharakteristikinformationen (VI) schätzt.

**5.** Fahrunterstützungsvorrichtung nach einem der Ansprüche 1 bis 4, des Weiteren umfassend einen Eingriffsunterstützungs-Eingabebestimmer (182), der dazu konfiguriert ist, einen Grad des Eingriffs variabel zu bestimmen.

**6.** Fahrunterstützungsvorrichtung nach einem der Ansprüche 1 bis 5,

wobei es sich bei dem Fahrvorgang des Fahrers um einen Lenkvorgang handelt, und
das Verhalten des Fahrzeugs (10) einen Weg (VP) des Fahrzeugs (10) beinhaltet.

**7.** Fahrunterstützungsvorrichtung nach einem der Ansprüche 1 bis 5,

wobei es sich bei dem Fahrvorgang des Fahrers um mindestens eines aus einem Bremsvorgang und einem Beschleunigungsvorgang handelt, und
das Verhalten des Fahrzeugs (10) eine Geschwindigkeit des Fahrzeugs (10) beinhaltet.

**8.** Fahrunterstützungsvorrichtung nach einem der Ansprüche 1 bis 7, wobei der Rechner (160) für einen akzeptablen Steuereingabebereich das Verhalten des Fahrzeugs (10) ohne den Eingriff schätzt.

**Revendications**

**1.** Dispositif d'aide à la conduite configuré pour effectuer une intervention dans une opération de conduite prédéterminée d'un conducteur d'un véhicule (10), le dispositif d'aide à la conduite comprenant :

un dispositif de réglage de plage (120) configuré pour régler une plage prédéterminée qui est une plage par rapport à un comportement du véhicule (10) ; et
un exécuteur d'intervention d'opération (180) ;
**caractérisé par**
un calculateur de plage d'entrée de commande acceptable (160) configuré pour obtenir des informations de caractéristique d'action de conduite (DI) indiquant une caractéristique d'action de conduite d'un conducteur du véhicule dans un certain environnement de conduite et pour calculer une plage d'entrée de commande acceptable qui est une plage de l'opération de conduite du conducteur acceptée à un moment présent, afin d'amener le comportement du véhicule (10) estimé en utilisant les informations de caractéristique d'action de conduite obtenues (DI) à être maintenu dans la plage prédéterminée sur un intervalle d'estimation prédéterminé ; et
un dispositif de détermination (170) configuré pour déterminer si l'opération de conduite du conducteur à l'heure actuelle est dans la plage d'entrée de commande acceptable ; et en ce que
ledit exécuteur d'intervention de fonctionnement (180) est configuré pour effectuer l'intervention lorsqu'il est déterminé que le fonctionnement de conduite du conducteur au moment présent est en dehors de la plage d'entrée de commande acceptable.

**2.** Dispositif d'aide à la conduite selon la revendication 1, dans lequel le dispositif de réglage de plage (120) obtient des informations d'action de conduite spécifiques qui sont des informations de caractéristiques d'action de conduite spécifiques du conducteur et règle la plage prédéterminée en utilisant les informations d'action de conduite spécifiques obtenues.

**3.** Dispositif d'aide à la conduite selon la revendication 1 ou la revendication 2, comprenant en outre un gestionnaire d'informations caractéristiques d'action de conduite (150) configuré pour accumuler des informations de comportement indiquant le comportement du véhicule (10) pendant la conduite du véhicule (10), en corrélation avec le conducteur du véhicule (10) et pour générer les informations caractéristiques d'action de conduite (DI) en utilisant les informations de comportement accumulées.

**4.** Dispositif d'aide à la conduite selon l'une quelconque des revendications 1 à 3, dans lequel le calculateur de plage d'entrée de commande acceptable (160) obtient des informations caractéristiques du véhicule (VI) indiquant une caractéristique de mouvement du véhicule (10) et estime le comportement du véhicule (10) en utilisant les informations caractéristiques de l'action de conduite (DI) et les informations caractéristiques du véhicule (VI).

**5.** Dispositif d'aide à la conduite selon l'une quelconque des revendications 1 à 4, comprenant en outre un déterminateur d'entrée de support d'intervention (182) configuré pour déterminer de manière variable un degré d'intervention.

**6.** Dispositif d'aide à la conduite selon l'une quelconque des revendications 1 à 5, dans lequel l'opération de conduite du conducteur est une opération de direction, et
le comportement du véhicule (10) comprend un trajet (VP) du véhicule (10).

**7.** Dispositif d'aide à la conduite selon l'une quelconque des revendications 1 à 5, dans lequel l'opération de conduite du conducteur est au moins une opération parmi une opération de freinage et une opération d'accélération, et
le comportement du véhicule (10) comprend une vitesse du véhicule (10).

**8.** Dispositif d'aide à la conduite selon l'une quelconque des revendications 1 à 7, dans lequel le calculateur de plage d'entrée de commande acceptable (160) estime le comportement du véhicule (10) sans l'intervention.

FIG.1

EP 3 276 589 B1

FIG.2

FIG.3

FIG.4

FIG.5

FIG.6

FIG.7

FIG.8

FIG.9

FIG.10

FIG.11

FIG.12

FIG.13

## FIG.14

START

GRASP DRIVING ENVIRONMENT
BASED ON DETECTION RESULTS OF
LANE BOUNDARIES, OBSTACLES AND THE LIKE — S110

SET ACCEPTABLE SAFETY RANGE SR
USING MODEL DRIVING ACTION INFORMATION MI — S120

CALCULATE ACCEPTABLE CONTROL INPUT RANGE $\theta$ safe
USING DRIVING ACTION CHARACTERISTIC INFORMATION DI
AND VEHICLE CHARACTERISTIC INFORMATION VI — S130

OPERATION $\theta$
AT PRESENT TIME t
IS WITHIN ACCEPTABLE CONTROL
INPUT RANGE $\theta$ safe? — S140

YES

NO

IN TRANSIENT AREA
$\theta$ tra? — S142

YES

NO

DETERMINE
INTERVENTION SUPPORT INPUT Ua — S150

MAKE OPERATION INTERVENTION — S160

TERMINATION
INSTRUCTION? — S170

NO

YES

END

FIG.15

## REFERENCES CITED IN THE DESCRIPTION

**Patent documents cited in the description**

- JP 2010201954 A

- JP 2009298355 A

**Non-patent literature cited in the description**

- **NORIYASU NOTO et al.** Steering assisting system for obstacle avoidance based on personalized potential field. *Intelligent Transportation Systems (ITSC),* 2012
- **IKAMI NORIMITSU et al.** Online parameter estimation of driving behavior using probability-weighted ARX models. *Intelligent Transportation Systems (ITSC),* 2011

- **OKUDA et al.** Obstacle avoiding assist control based on personalized potential technique. *Journal of Automotive Engineers,* 2013, vol. 44.3, 895-901
- **NAGAI et al.** Obstacle avoiding assist control based on personalized potential technique (part 2). *Proceedings of Autumn Symposium,* 2013, 211-20135816